(19) **Europäisches Patentamt / European Patent Office / Office européen des brevets**

(11) **EP 2 455 354 A1**

(12) **EUROPEAN PATENT APPLICATION**
published in accordance with Art. 153(4) EPC

(43) Date of publication:
**23.05.2012 Bulletin 2012/21**

(21) Application number: **10799910.4**

(22) Date of filing: **12.07.2010**

(51) Int Cl.:
*C04B 35/443* (2006.01)   *C01G 23/00* (2006.01)

(86) International application number:
**PCT/JP2010/062028**

(87) International publication number:
**WO 2011/007852 (20.01.2011 Gazette 2011/03)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **16.07.2009 JP 2009167984**

(71) Applicant: **Sumitomo Chemical Company, Limited Tokyo 104-8260 (JP)**

(72) Inventors:
- **IWASAKI, Kentaro**
  **Niihama-shi**
  **Ehime 792-0025 (JP)**
- **NEMOTO, Akiyoshi**
  **Tsukuba-shi**
  **Ibaraki 305-0046 (JP)**

(74) Representative: **Harmsen, Dirk**
  **Vossius & Partner**
  **Siebertstrasse 4**
  **81675 München (DE)**

(54) **METHOD FOR PRODUCING FIRED ALUMINUM TITANATE BODY**

(57) A process for producing an aluminum titanate-based fired body, comprising a step of firing a shaped body of a starting material mixture containing an aluminum source powder, a titanium source powder and a magnesium source powder, wherein the BET specific surface area of the magnesium source powder is not less than 2.0 $m^2/g$ and not more than 30.0 $m^2/g$.

**Description**

TECHNICAL FIELD

The present invention relates to a process for producing a fired body of an aluminum titanate-based ceramics, and particularly relates to a process for producing a fired body of an aluminum titanate-based ceramics by firing a shaped body of a starting material mixture containing an aluminum source powder, a titanium source powder, and a magnesium source powder.

BACKGROUND ART

An aluminum titanate-based ceramics is a ceramics containing titanium and aluminum as the constitutive elements and showing a crystal pattern of aluminum titanate in X-ray diffraction spectrum, and is known as a ceramics excellent in heat resistance. An aluminum titanate-based ceramics have been conventionally used as firing tools such as crucibles, and recently an industrial applicability thereof has been increased as materials for constituting ceramics filters for collecting fine carbon particles contained in exhaust gas discharged from internal combustion engines such as diesel engines.

As an aluminum titanate-based ceramics, for example, there is known a ceramics containing an aluminum magnesium titanate crystal. International Publication WO 05/105704 discloses preparation of an aluminum magnesium titanate fired body by firing a starting material mixture containing a titanium-containing compound such as titania ceramics, an aluminum-containing compound such as alumina ceramics, and a magnesium-containing compound such as magnesia ceramics or its shaped body.

In the case of producing a shaped body of a ceramics powder mixture containing various kinds of metal ingredients and firing the shaped body thereafter as described above, there is a need to add a large amount of a binder to the ceramics powder mixture for firmly bonding the ceramics powders to each other in the shaped body before firing.

The binder contained in the shaped body is burned out at the time of firing; however the shaped body after the binder is burned out by the firing has low mechanical strength and by the time when the firing of the shaped body is finished, defects such as cracking are sometimes formed in the shaped body.

DISCLOSURE OF THE INVENTION

An object of the present invention is to provide a process for suppressing occurrence of defects such as cracking of a shaped body in a step of firing the shaped body (hereinafter, referred to also as a firing step) since the mechanical strength of the shaped body can be maintained to be high even after a binder is burned out during the firing step. By the process of the present invention, an aluminum titanate-based fired body with a desired shape can be produced at a high yield.

The present invention provides a process for producing an aluminum titanate-based fired body, comprising a step of firing a shaped body of a starting material mixture containing an aluminum source powder, a titanium source powder and a magnesium source powder, wherein the BET specific surface area of the magnesium source powder is not less than 2.0 $m^2$/g and not more than 30.0 $m^2$/g. The step of firing the shaped body of the starting material mixture preferably comprises a step of shaping the starting material mixture to obtain the shaped body and a step of firing the shaped body. The starting material mixture preferably further contains a silicon source powder.

BEST MODE FOR CARRYING OUT THE INVENTION

The process of the present invention comprises a step of firing a shaped body of a starting material mixture containing one or more aluminum source powders, one or more titanium source powders and one or more magnesium source powders. An aluminum titanate-based fired body obtained by firing the shaped body of such a starting material mixture is a fired body of an aluminum magnesium titanate crystal.

The aluminum source powder is a powder of a compound that will become an aluminum ingredient constituting the aluminum titanate-based fired body and is a powder of a compound containing only aluminum as a metal ingredient. The aluminum source powder includes, for example, a powder of alumina (aluminum oxide). The alumina may be crystalline or amorphous. When the alumina is crystalline, the crystal form thereof includes a $\gamma$-form, a $\delta$-form, a $\theta$-form, and an $\alpha$-form, and particularly, an $\alpha$-form is preferable.

The aluminum source powder may be a powder of a compound to be led to alumina by firing in air. The compound includes, for example, aluminum salt, aluminum alkoxide, aluminum hydroxide, and metal aluminum.

The aluminum salt may be an inorganic salt with an inorganic acid, or an organic salt with an organic acid. The inorganic salt particularly includes, for example, aluminum nitrates such as aluminum nitrate and ammonium aluminum nitrate; and aluminum carbonates such as ammonium aluminum carbonate. The aluminum organic salt includes, for example, aluminum oxalate, aluminum acetate, aluminum stearate, aluminum lactate, and aluminum laurate.

The aluminum alkoxide particularly includes, for example, aluminum isopropoxide, aluminum ethoxide, aluminum sec-butoxide, and aluminum tert-butoxide.

The aluminum hydroxide may be crystalline or amorphous. When the aluminum hydroxide is crystalline, the crystal form thereof includes, for example, a gibbsite form, a bayerite form, a norstrandite form, a boehmite form, and a pseudo-boehmite form. Amorphous aluminum hydroxide includes, for example, an aluminum hydrolyzate to be obtained by hydrolysis of an aqueous solution of a water-soluble aluminum compound such as aluminum salt or aluminum alkoxide.

Of the above, an alumina powder and an aluminum hydroxide powder are preferably used as the aluminum source powder, and an α-farm alumina powder is more preferred. The aluminum source powder may contain minor components that are inevitably contained in the production process.

The secondary particle diameter of the aluminum source powder is not specifically limited; however, a particle diameter (D50) corresponding to a cumulative percentage of 50 % on a volume basis measured by a laser diffractometry is preferably in a range of from 0.1 to 200 $\mu$m. In order to efficiently produce aluminum magnesium titanate, D50 of the aluminum source powder is more preferably in a range of from 0.3 to 100 $\mu$m. In order to efficiently produce aluminum magnesium titanate, the BET specific surface area of the aluminum source powder is preferably in a range of from 0.1 to 50 $m^2$/g and more preferably in a range of from 0.2 to 30 $m^2$/g.

The titanium source powder is a powder of a compound that will become a titanium ingredient constituting the aluminum titanate-based fired body, and is a compound containing titanium as a metal element. The compound includes, for example, a powder of titanium oxide. Titanium oxide includes, for example, titanium(IV) oxide, titanium(III) oxide, and titanium(II) oxide and titanium(IV) oxide is particularly preferable. The titanium(IV) oxide may be crystalline or amorphous. When the titanium(IV) oxide is crystalline, the crystal form thereof includes an anatase form, a rutile form, and a brookite form and particularly, an anatase form or a rutile form are more preferred.

The titanium source powder may be a powder of a compound to be led to titania by firing in air. The compound includes, for example, titanium salt, titanium alkoxide, titanium hydroxide, titanium nitride, titanium sulfide, and metal titanium.

The titanium salt particularly includes titanium trichloride, titanium tetrachloride, titanium(IV) sulfide, titanium (VI) sulfide, and titanium(IV) sulfate. The titanium alkoxide particularly includes titanium(IV) ethoxide, titanium(IV) methoxide, titanium(IV) tert-butoxide, titanium(IV) isobutoxide, titanium(IV) n-propoxide, titanium(IV) tetraisopropoxide, and their chelate compounds.

Of the above, a titanium oxide powder is preferable as the titanium source powder, and a titanium(IV) oxide powder is more preferred. The surface of the titanium source powder may be coated with a thin surface layer of alumina, silica, zirconia, aluminum hydroxide and the like.

As the titanium source power, a titanium-containing composite oxide such as aluminum titanate or aluminum magnesium titanate can be used. The titanium source powder may contain minor components that are inevitably contained in the production process.

The secondary particle diameter of the titanium source powder is not specifically limited; however, a particle diameter (D50) corresponding to a cumulative percentage of 50 % on a volume basis measured by a laser diffractometry is preferably in a range of from 0.1 to 200 $\mu$m. In order to efficiently produce aluminum magnesium titanate, D50 of the titanium source powder is more preferably in a range of from 0.1 to 100 $\mu$m. In order to efficiently produce aluminum magnesium titanate, the BET specific surface area of the titanium source powder is preferably in a range of from 1.0 to 50 $m^2$/g and more preferably in a range of from 2.0 to 30 $m^2$/g.

The amounts of the titanium source powder and the aluminum source powder to be used are preferably such that a titania ($TiO_2$)-equivalent amount of the titanium source powder to be used is from 30 parts by mass to 70 parts by mass and an alumina ($Al_2O_3$)-equivalent amount of the aluminum source powder to be used is from 70 parts by mass to 30 parts by mass, and more preferably such that the titania-equivalent amount of the titanium source powder to be used is from 40 parts by mass to 60 parts by mass and the alumina-equivalent amount of the aluminum source powder to be used is from 60 parts by mass to 40 parts by mass, relative to 100 parts by mass of the total of the titania-equivalent amount of the titanium source powder to be used and the alumina-equivalent amount of the aluminum source powder to be used.

In the description, the $Al_2O_3$(alumina)-equivalent mass $x_1$ of the aluminum source powder can be calculated by the following formula (A).

$$x_1 = N_{10} \times x_{10} \quad (A)$$

In the formula (A), $N_{10}$ represents the formula weight of $Al_2O_3$, $x_{10}$ represents the $Al_2O_3$ (alumina)-equivalent

molar amount of the aluminum source powder.

The $Al_2O_3$ (alumina)-equivalent molar amount $x_{10}$ of the aluminum source powder can be calculated by the following formula (A-1).

$$x_{10} = (w_1 \times M_1) / (N_1 \times 2) \quad (A\text{-}1)$$

In the formula (A-1), $w_1$ represents the amount to be used (g) of the aluminum source powder, $M_1$ represents the molar amount of aluminum in 1 mol of the aluminum source powder, $N_1$ represents the formula weight of the aluminum source powder to be used.

When two or more types of aluminum source powders are used, each molar amount of each aluminum source powder is calculated by the formula (A), and each molar amount are summed up to give the molar amount of the aluminum source powders to be used.

In the description, the $TiO_2$(titania)-equivalent mass $x_2$ of the titanium source powder can be calculated by the following formula (B).

$$x_2 = N_{20} \times x_{20} \quad (B)$$

In the formula (B), $N_{20}$ represents the formula weight of $TiO_2$, $x_{20}$ represents the $TiO_2$(titania)-equivalent molar amount of the titanium source powder.

The $TiO_2$(titania)-equivalent molar amount $x_{20}$ of the titanium source powder can be calculated by the following formula (B-1).

$$x_{20} = (w_2 \times M_2) / N_2 \quad (B\text{-}1)$$

In the formula (B-1), $w_2$ represents the amount to be used (g) of the titanium source powder, $M_2$ represents the molar amount of titanium in 1 mol of the titanium source powder, $N_2$ represents the formula weight of the titanium source powder to be used.

When two or more types of titanium source powders are used, each molar amount of each titanium source powder is calculated by the formula (B), and each molar amount are summed up to give the molar amount of the titanium source powders to be used.

The magnesium source powder includes a powder of magnesia (magnesium oxide). The magnesium source powder may be a powder of a compound to be led to magnesia by firing in air. Examples of such a compound include magnesium salt, magnesium alkoxide, magnesium hydroxide, magnesium nitride, and metal magnesium.

The magnesium salt particularly includes magnesium chloride, magnesium perchlorate, magnesium phosphate, magnesium pyrophosphate, magnesium oxalate, magnesium nitrate, magnesium carbonate, magnesium acetate, magnesium sulfate, magnesium citrate, magnesium lactate, magnesium stearate, magnesium salicylate, magnesium myristate, magnesium gluconate, magnesium dimethacrylate, and magnesium benzoate.

The magnesium alkoxide particularly includes magnesium methoxide, and magnesium ethoxide.

As the magnesium source powder, a powder of a compound serving both as a magnesium source and an aluminum source can also be used. The compound includes, for example, magnesia spinel ($MgAl_2O_4$), hydrotalcite [$Mg_6Al_2(OH)_{16}CO_3.4H_2O$ (Mg and Al are divalent and trivalent, respectively)], and hydrotalcites [for example, "DHT-4A", ($Mg_{4.5}Al_2(OH)_{13}CO_3.3.5H_2O$) and "DHT-6", ($Mg_6Al_2(OH)_{16}CO_3.4H_2O$)]. When a powder of a compound serving both as a magnesium source and an aluminum source is used as the magnesium source powder, the ratio of the total of the $Al_2O_3$ (alumina)-equivalent amount of the aluminum source powder and the $Al_2O_3$ (alumina)-equivalent amount of the aluminum ingredient contained in the powder of the compound serving both as a magnesium source and an aluminum source, to the $TiO_2$ (titania)-equivalent amount of the titanium source powder is so controlled as to fall within the above-mentioned range in the starting material mixture.

The magnesium source powder may contain minor components that are inevitably contained in the production process.

The BET specific surface area of the magnesium source powder is not less than 2.0 $m^2$/g and not more than 30.0 $m^2$/g. Use of the magnesium source powder having a BET specific surface area within the range makes it possible for a shaped body to keep high mechanical strength even after a binder is burned out in a firing step and therefore, occurrence of cracking and the like of the shaped body in the firing step can be suppressed. The BET specific surface area of the magnesium source powder is preferably not less than 5.0 m$^2$/g and not more than 20.0 m$^2$/g.

The secondary particle diameter of the magnesium source powder is not specifically limited as long as the BET specific surface area is within the above-mentioned range; however, a particle diameter (D50) corresponding to a cumulative percentage of 50 % on a volume basis measured by a laser diffractometry is preferably in a range of from 0.5 to 30 $\mu$m. In order to reduce a firing shrinkage ratio of the shaped body of the starting material mixture, D50 of the magnesium source powder is more preferably in a range of from 3 to 20 $\mu$m.

The molar ratio of a MgO (magnesia)-equivalent content of the magnesium source powder in the starting material mixture to the total of the Al$_2$O$_3$ (alumina)-equivalent amount of the aluminum source powder and the TiO$_2$ (titania)-equivalent amount of the titanium source powder is preferably from 0.03 to 0.15 and more preferably from 0.03 to 0.12. Controlling the content of the magnesium source powder within the range makes it relatively easily possible to obtain an aluminum titanate-based fired body having improved heat resistance and a large fine pore diameter and porosity.

In the description, the MgO(magnesia)-equivalent mass $x_3$ of the magnesium source powder can be calculated by the following formula (C).

$$x3 = N30 \times x30 \quad (C)$$

In the formula (C), $N_{30}$ represents the formula weight of MgO, $x_{30}$ represents the MgO(magnesia)-equivalent molar amount of the magnesium source powder.

The MgO(magnesia)-equivalent molar amount $x_{30}$ of the magnesium source powder can be calculated by the following formula (C-1).

$$x30 = (w_3 \times M_3) / N_3 \quad (C\text{-}1)$$

In the formula (C-1), $w_3$ represents the amount to be used (g) of the magnesium source powder, $M_3$ represents the molar amount of magnesium in 1 mol of the magnesium source powder, $N_3$ represents the formula weight of the magnesium source powder to be used.

When two or more types of magnesium source powders are used, each molar amount of each magnesium source powder is calculated by the formula (C), and each molar amount are summed up to give the molar amount of the magnesium source powders to be used (hereinafter, the same shall apply in molar amount calculation).

The starting material mixture preferably further contains one or more silicon source powders. The silicon source powder is a powder of a compound that will be contained in the aluminum titanate-based fired body as a silicon ingredient. Inclusion of a silicon source powder in the starting material mixture makes it possible to produce an aluminum titanate-based fired body having improved heat resistance. The silicon source powder includes, for example, a powder of silicon oxide (silica) such as silicon dioxide or silicon monoxide.

The silicon source powder may be a powder of a compound to be led to silica by firing in air. The compound includes, for example, silicic acid, silicon carbide, silicon nitride, silicon sulfide, silicon tetrachloride, silicon acetate, sodium silicate, sodium orthosilicate, feldspar, composite oxide containing silicon and aluminum, and glass frit. Feldspar, glass frit and the like are preferred from the viewpoint of easiness of industrial availability. Glass frit and the like are more preferred from the viewpoint of easiness of industrial availability and stable composition. Glass frit is flaky or powdery glass to be obtained by pulverizing glass.

When glass frit is used as the silicon source powder, glass frit having a deformation point of 700°C or higher is preferred in order to further improve the thermal decomposition resistance of the aluminum titanate-based fired body to be obtained. The deformation point of glass frit is defined as a temperature (°C) at which expansion stops and then shrinkage starts when the expansion of the glass frit is measured from a low temperature with a thermo-mechanical analyzer (TMA).

As the glass constituting the above-mentioned glass frit, an ordinary silicate glass that comprises silica (SiO$_2$) as a main ingredient can be used. In this connection, the fact that glass contains silicic acid as a main ingredient means that glass contains 50% by mass or more of silicic acid. Like an ordinary silicate glass, the glass constituting the glass frit may contain alumina (Al$_2$O$_3$), sodium oxide (Na$_2$O), potassium oxide (K$_2$O), calcium oxide (CaO), magnesia (MgO) and the like as the other constitutive ingredients. Further, the glass constituting the glass frit may contain ZrO$_2$ for improving the hot water resistance of the glass itself.

The secondary particle diameter of the silicon source powder is not specifically limited; however, a particle diameter (D50) corresponding to a cumulative percentage of 50 % on a volume basis measured by a laser diffractometry is preferably in a range of from 1 to 20 μm. In order to efficiently produce aluminum magnesium titanate, D50 of the silicon source powder is more preferably in a range of from 5 to 20 μm. In order to efficiently produce aluminum magnesium titanate, the BET specific surface area of the silicon source powder is preferably in a range of from 0.5 to 20 $m^2/g$ and more preferably in a range of from 1.0 to 10 $m^2/g$.

When the starting material mixture contains a silicon source powder, a $SiO_2$ (silica) -equivalent content of the silicon source powder in the starting material mixture is preferably from 0.1 parts by mass to 10 parts by mass and more preferably 5 parts by mass or less, relative to 100 parts by mass of the total of the $Al_2O_3$ (alumina)-equivalent amount of the aluminum source powder and the $TiO_2$ (titania)-equivalent amount of the titanium source powder. The silicon source powder may contain minor components that are inevitably contained in the production process.

In the description, the $SiO_2$(silica)-equivalent mass $x_4$ of the silicon source powder can be calculated by the following formula (D).

$$x_4 = N_{40} \times x_{40} \quad (D)$$

In the formula (D), $N_{40}$ represents the formula weight of $SiO_2$, $x_{40}$ represents the $SiO_2$(silica)-equivalent molar amount of the silicon source powder.

The $SiO_2$-equivalent molar amount $x_{40}$ of the silicon source powder can be calculated by the following formula (D-1).

$$x_{40} = (w_4 \times M_4) / N_4 \quad (D\text{-}1)$$

In the formula (D-1), $w_4$ represents the amount to be used (g) of the silicon source powder, $M_4$ represents the molar amount of silicon in 1 mol of the silicon source powder, $N_4$ represents the formula weight of the silicon source powder to be used.

When two or more types of silicon source powders are used, each molar amount of each silicon source powder is calculated by the formula (D), and each molar amount are summed up to give the molar amount of the silicon source powders to be used.

As described above, in the process of the present invention, like the composite oxide such as magnesia spinel ($MgAl_2O_4$), aluminum titanate, or aluminum magnesium titanate, a compound containing two or more metal elements of titanium, aluminum, magnesium and silicon as ingredients may be used as the starting material powder. Such a compound can be considered to be equivalent to the mixture of the individual metal source compound powders. Based on this consideration, the content of the aluminum source powder, the titanium source powder, the magnesium source powder and the silicon source powder in the starting material mixture is controlled to fall within the above-mentioned range.

The starting material mixture can be obtained by mixing a titanium source powder, an aluminum source powder, a magnesium source powder, and a silicon source powder which is optionally used (hereinafter, the titanium source powder, the aluminum source powder, the magnesium source powder, and the silicon source powder which is optionally used are collectively referred to as "starting material powders"). An ordinarily used mixer may be used for the mixing and the mixer includes, for example, stirring mixers such as Nauter mixer and Lodige mixer; air mixers such as flush blender; ball mills, and vibration mills. A mixing method may be either of dry mixing and wet mixing.

When dry mixing is carried out, for example, starting material powders are mixed and stirred in a grinding container without being dispersed in a liquid medium and generally, stirred in a grinding container in the coexistence of grinding media.

As the grinding container, a container made of a metal material such as stainless steel and the like can be used. The grinding container may be coated with a fluorine resin, a silicon resin, or a urethane resin in the inner surface thereof. The internal volume of the grinding container is preferably from 1 to 4 times by volume, and more preferably from 1.2 to 3 times by volume as much as the total volume of the starting material powders and the grinding media.

The grinding media include, for example, alumina beads and zirconia beads having particle diameter of preferably from 1 mm to 100 mm and more preferably from 5 mm to 50 mm. The amount of the grinding media to be used is preferably from 1 to 1000 times by mass, and more preferably from 5 to 100 times by mass as much as the total amount of the starting material powders to be used.

Mixing and pulverization of the starting material powders are carried out by, for example, putting above-mentioned starting material powders and the grinding media into a grinding container and thereafter vibrating or rotating or both vibrating and rotating the grinding container. The starting material powders are stirred and mixed with the grinding media and at the same time pulverized by vibrating and/or rotating the grinding container. For vibrating or rotating the grinding container, an ordinary grinding machine such as vibration mill, ball mill, or planetary mill can be used and a vibration mill is preferably used from the viewpoint of easiness of operation in industrial scale. In the case of vibrating the grinding container, the amplitude is preferably form 2 mm to 20 mm and more preferably from 12 mm or less. The mixing and pulverization may be carried out by continuous process, or by batch process and from the viewpoint of easiness of operation in industrial scale, it is preferably carried out by continuous process. The time taken for mixing and pulverization is generally from 1 minute to 6 hours and preferably from 1.5 minutes to 2 hours.

At the time of mixing and pulverizing the starting material powders in dry condition, one or more additives such as grinding aid and deflocculant may be added to the starting material powders. The grinding aid includes, for example, monohydric alcohols such as methanol, ethanol, and propanol; dihydric alcohols such as propylene glycol, polypropylene glycol, and ethylene glycol; amines such as triethanolamine; higher fatty acids such as palmitic acid, stearic acid, and oleic acid; and carbon materials such as carbon black and graphite.

In the case of using additives, the total amount thereof to be used is preferably from 0.1 to 10 parts by mass, more preferably from 0.5 to 5 parts by mass, and furthermore preferably from 0.75 to 2 parts by mass, relative to 100 parts by mass of the total amount of the starting material powders to be used.

On the other hand, when wet mixing is carried out, for example, the starting material powders may be mixed while being dispersed in a solvent. The mixing method may be by, for example, stirring the starting material powders in a liquid solvent, or pulverizing the starting material powders in a grinding container in the coexistence of grinding media. As the grinding media and the grinding container and a grinding machine, the same grinding container and grinding machine as those used in the case of dry mixing can be used. When mixing and pulverization are carried out in a grinding container in the coexistence of grinding media, additives that are the same as those in the case of dry mixing may be used.

The solvent to be used includes, for example, monohydric alcohols such as methanol, ethanol, propanol, and butanol; dihydric alcohols such as propylene glycol, polypropylene glycol, and ethylene glycol; and water. Above all, water is preferred, and ion-exchanged water is more preferred from the viewpoint of less impurities. The amount of the solvent to be used is preferably from 20 parts by mass to 1000 parts by mass, and more preferably from 30 parts by mass to 300 parts by mass, relative to 100 parts by mass of the total of the starting material powders.

At the time of mixing in wet condition, a dispersant may be added to the solvent. The dispersant includes, for example, inorganic acids such as nitric acid, hydrochloric acid, and sulfuric acid; organic acids such as oxalic acid, citric acid, acetic acid, malic acid, and lactic acid; alcohols such as methanol, ethanol, and propanol; and surfactants such as ammonium polycarboxylate. When the dispersant is used, the amount thereof to be used is preferably from 0.1 parts by mass to 20 parts by mass, and more preferably from 0.2 parts by mass to 10 parts by mass, relative to 100 parts by mass of the solvent.

In the wet mixing, after the mixing, the starting material mixture can be obtained by removing the solvent. Removal of the solvent can be carried out by distillation removal of the solvent. A method for distillation removal of the solvent is not specifically limited, and may be carried out by air dry at room temperature, by vacuum drying, or by heat drying. The drying method may be static drying or fluidizing drying. The temperature at the time of heat drying is not specifically limited; however, it is preferably not lower than 50°C and not higher than 250°C. An instrument to be used for heat drying includes, for example, a shelf drier, a slurry drier, and a spray drier.

At the time of mixing in wet process, depending on the kinds of the aluminum source powder and the like, the powder may sometimes be dissolved in a solvent; however the aluminum source powder dissolved in the solvent is again precipitated in the form of a solid matter by distillation removal of the solvent.

The process of the present invention is preferable to comprise a step of obtaining a shaped body by shaping a starting material mixture containing starting material powders and a step of firing the shaped body. Shaping the starting material mixture to obtain a shaped body and firing the shaped body makes it possible to suppress the shrinkage during firing, as compared with a case where the starting material mixture is directly fired. Accordingly, the aluminum titanate-based fired body to be obtained can be effectively prevented from being cracked, and an aluminum titanate-based fired body can be obtained in which the porous form of the porous aluminum titanate-based crystal formed by firing are maintained. The form of the shaped body is not specifically limited, and includes, for example, a honeycomb form, a rod form, a tubular form, a tabular form, and a crucible-like form.

The shaping machine to be used for shaping the starting material mixture includes a uniaxial press, an extruder, a tabletting machine, and a granulator. In extrusion shaping, for example, additives such as a pore-forming agent, a lubricant, a plasticizer, a dispersant, a solvent and a binder can be added to the starting material mixture, which may be shaped.

In addition, the additive may be a substance serving both pore-forming agent and binder. Such a substance can keep the form of the shaped body by bonding the particles of the starting material powders at the time of shaping and can form pores while being burned itself at the time of firing. The substance particularly includes polyethylene and the like.

The pore-forming agent includes carbon materials such as graphite; resins such as polyethylene, polypropylene, polymethyl methacrylate; vegetable materials such as starch, nut-shell, walnut-shell, corn; ice; and dry ice. The amount of the pore-forming agent to be added is preferably from 0 to 40 parts by mass, and more preferably from 0 to 25 parts by mass, relative to 100 parts by mass of the total of the starting material powders.

The lubricant and the plasticizer include alcohols such as glycerin; higher fatty acids such caprylic acid, lauric acid, palmitic acid, alginic acid, oleic acid, and stearic acid; and metal salts of stearic acid such as aluminum stearate. The amount of the lubricant and the plasticizer to be added is preferably from 0 to 10 parts by mass, and more preferably from 1 to 5 parts by mass, relative to 100 parts by mass of the total of the starting material powders.

The dispersant includes, for examples, inorganic acids such as nitric acid, hydrochloric acid, and sulfuric acid; organic acids such as oxalic acid, citric acid, acetic acid, malic acid, and lactic acid; alcohols such as methanol, ethanol, and propanol; and surfactants such as ammonium polycarboxylate and polyoxyalkylene alkyl ether. The amount of the dispersant to be added is preferably from 0 to 20 parts by mass, and more preferably from 2 to 8 parts by mass, relative to 100 parts by mass of the total of the starting material powders.

The solvent includes, for examples, monohydric alcohols such as methanol, ethanol, butanol, and propanol; dihydric alcohols such as propylene glycol, polypropylene glycol, and ethylene glycol; and water. Above all, water is preferred, and ion-exchanged water is more preferred from the viewpoint of less impurities. The amount of the solvent to be used is preferably from 10 parts by mass to 100 parts by mass, and more preferably from 20 parts by mass to 80 parts by mass, relative to 100 parts by mass of the total of the starting material powders.

The binder includes celluloses such as methyl cellulose, carboxymethyl cellulose, sodium carboxymethyl cellulose; alcohols such as polyvinyl alcohol; salts such as lignin sulfonate; waxes such as paraffin wax, microcrystalline wax; and thermoplastic resins such as EVA, polyethylene, polystyrene, liquid-crystal polymer, engineering plastics. The amount of the binder to be added is preferably 20 parts by mass or less, and more preferably 15 parts by mass or less, relative to 100 parts by mass of the total of the starting material powders.

The firing temperature in a step of firing the shaped body is preferably 1300°C or higher, and more preferably 1400°C or higher. In order that the aluminum titanate-based fired body to be produced is made to be easily processed, the firing temperature is preferably 1650°C or lower, more preferably 1600°C or lower, and furthermore preferably 1550°C or lower. The heating rate up to the firing temperature is not specifically limited, and it is preferably from 2°C /hr to 500°C /hr. When a silicon source powder is used, preferably, a step of keeping the mixture in a temperature range of from 1100 to 1300°C for 3 or more hours (retention step) is provided prior to the firing step. Providing the retention step makes it possible to promote fusion and diffusion of the silicon source powder. When the starting material mixture contains a binder and the like, the firing step includes a degreasing step for removing the binder. The degreasing step is carried out typically in the heating stage up to the firing temperature (for example, within a temperature range of from 150 to 400°C). In the degreasing step, the heating rate is preferably suppressed as much as possible. In the process of the present invention, the mechanical strength of the shaped body after the degreasing step can be improved and accordingly, cracking and the like of the shaped body at the time of the firing can be suppressed.

The firing may be carried out in air, and depending on the type and/or the amount ratio of the starting material powders, the firing may be carried out in an inert gas such as nitrogen gas or argon gas, or may be carried out in a reducing gas such as carbon monoxide gas or hydrogen gas. The firing may also be carried out in an atmosphere where the water vapor partial pressure is reduced.

In general, the firing is carried out using an ordinary firing furnace such as a tubular electric furnace, a boxy electric furnace, a tunnel furnace, a far-IR furnace, a microwave heating furnace, a shaft furnace, a reverberating furnace, a rotary furnace, or a roller hearth furnace. The firing may be carried out by batch process, or by continuous process. The firing may be carried out in a static mode or a fluidized mode.

The time to be taken for the firing may be a time enough for transition of the shaped body of the starting material mixture into an aluminum magnesium titanate crystal, and is generally 10 minutes to 72 hours though varying depending on the amount of the starting material mixture, the type of the firing furnace, the firing temperature, the firing atmosphere and the like.

As described above, an aluminum titanate-based fired body can be obtained. The aluminum titanate-based fired body has a form which almost maintains the form of the shaped body just after shaping.

The obtained aluminum titanate-based fired body can be processed into a desired form by cutting and the like.

The aluminum titanate-based fired body obtained by the process of the present invention can be used favorably, for example, for tools for firing furnaces such as crucibles, setters, saggers, refractories; exhaust gas filters to be used for exhaust gas purification in internal combustion engines such as diesel engines, gasoline engines; catalyst carriers; filtration filters to be used for edibles such as beer; ceramic filters such as selective permeation filters for selectively permeating gas components formed in oil purification, such as carbon monoxide, carbon dioxide, nitrogen, oxygen; electronic parts such as substrates and capacitors.

The aluminum titanate-based fired body obtained by the present invention includes a crystal pattern of aluminum magnesium titanate, and may include other crystal patterns of silica, alumina, titania and the like in the X-ray diffraction spectrum thereof. The aluminum titanate-based fired body obtained by the process of the present invention may be represented by a compositional formula, $Al_{2(1-x)}Mg_xTi_{(1+x)}O_5$. The value x is 0.01 or more, preferably not less than 0.01 and not more than 0.7, and more preferably not less than 0.02e and not more than 0.5 or less.

The present invention will be described in more detail with reference to the following Examples, but the present invention should not be limited to these. The aluminum titanate conversion ratio (AT conversion ratio) of the obtained fired body, the crushing strength of a pre-fired body, and the BET specific surface area and D50 of the starting material powders to be used were measured by the following methods.

(1) AT Conversion Ratio:

The aluminum titanate conversion ratio (AT conversion ratio) was calculated from the integrated intensity (IT) of the peak (titania rutile phase (110) face) appearing at the position of $2\theta = 27.4°$, and the integrated intensity ($I_{AT}$) of the peak (aluminum magnesium titanate phase (230) face) appearing at the position of $2\theta = 33.7°$ in a powdery X-ray diffraction spectrum, by the following formula:

$$\text{AT Conversion Ratio} = I_{AT} / (I_T + I_{AT}) \times 100 \ (\%).$$

(2) Crushing Strength

The crushing strength was measured for 5 samples of produced pre-fired body using a compression testing machine (Aikoh Engineering's "MODEL 1307") and the average of 5 samples was calculated to evaluate the mechanical strength of the pre-fired body.

(3) BET specific surface and D50 of starting material powders

The BET specific surface areas of an aluminum source powder, a titanium source powder, a magnesium source powder, and a silicon source powder were measured by a BET one-point measurement method using Macsorb (Mountech's "Model H201"). Distribution of the particle diameter (secondary particle diameter) of these starting material powders was measured, using a laser diffractiometric particle size analyzer (Nikkiso's "Microtrac HRA (X-100)") and the particle diameter (D50) corresponding to a cumulative percentage of 50 % on a volume basis was calculated.

Example 1

As the starting material powders, the pore-forming agents, and the binders, the followings were used. "Part(s) by mass" shown below is a value when the total amount of the starting material powders (an aluminum source powder, a titanium source powder, a magnesium source powder and a silicon source powder), the pore-forming agent, and the binders is defined to be 100 parts by mass. The prepared composition of the starting material powders mentioned below is, in terms of the alumina $[Al_2O_3]$-equivalent, titania $[TiO_2]$-equivalent, magnesia $[MgO]$-equivalent and silica $[SiO_2]$-equivalent molar ratio thereof, $[Al_2O_3]/[TiO_2]/[MgO]/[SiO_2] = 34.3\%/50.2\%/9.4\%/6.1\%$.

(1) Aluminum source powder:
Aluminum oxide powder ($\alpha$-form crystal, BET specific surface area: 0.53 m$^2$/g, D50: 28.5 $\mu$m)     33.70 parts by mass
(2) Titanium source powder:
Titanium oxide powder (Cronos' "Cronos 3025", rutile-form crystal, BET specific surface area: 2.95 m$^2$/g, D50: 0.5 $\mu$m)     38.92 parts by mass
(3) Magnesium source powder:
Magnesium oxide powder (Ube Materials' "UC-95S", BET specific surface area: 21.1 m$^2$/g, D50: 3.4 $\mu$m)     3.67 parts by mass
(4) Silicon source powder:
Glass frit (Takara Standard's "CK0832", BET specific surface area: 2.0 m$^2$/g, D50: 6.0 $\mu$m)     3.18 parts by mass
(5) Pore-formzng agent
Corn starch (Nihon Cornstarch's "Corn Starch Y-3P")     13.26 parts by mass
(6) Binder
Metolose (Shin-Etsu Chemical's "SM-4000")     5.09 parts by mass
Metolose (Shin-Etsu Chemical's "60SH-4000")     2.18 parts by mass

The above-mentioned aluminum source powder, titanium source powder, magnesium source powder and silicon source powder, pore-forming agent, binders, and water (in total amount of 198 g) were put into a plastic container (inner volume 1L) in combination with 500 g of alumina beads (diameter 15 mm). Thereafter, the container was rotated at a rotation speed of 80 rpm for 4 hours by a ball mill to mix the starting materials in the container, thereby obtain a starting material mixture. Five shaped bodies with a diameter of about 10 mm and a thickness of about 5 mm were produced by shaping 3 g of the obtained starting material mixture in a pressure of 0.3 t/cm$^2$ by a uniaxial press. Next, the shaped bodies were heated to 500°C at a heating rate of 60°C /h in a boxy electric furnace and thereafter cooled to obtain pre-fired bodies. The obtained five pre-fired bodies had an average value of crushing strength of 7.8 kgf and showed excellent mechanical strength.

The determination evaluation of the shaped body after the main firing step was carried out as follows. First, the shaped body before pre-firing was heated to 1500°C at a heating rate of 300°C /h in a boxy electric furnace, kept at the same temperature for 4 hours, and thereafter cooled to room temperature at a cooling rate of 300°C /h to obtain a fired body. The obtained fired body was pulverized in a mortar, and the resulting powder was analyzed by powdery X-ray diffractometry to give the diffraction spectrum thereof. The powder had a crystal peak of aluminum magnesium titanate. The AT conversion ratio of the powder was 100 %.

Example 2

Pre-fired bodies were produced in the same manner as in Example 1 except that, the following starting material powders, pore-forzning agent and binders were used. "Part(s) by mass" shown below is a value when the total amount of the starting material powders (an aluminum source powder, a titanium source powder, a magnesium source powder and a silicon source powder), the pore-forming agent, and the binders is defined to be 100 parts by mass. The prepared composition of the starting material powders mentioned below is, in terms of the alumina [Al$_2$O$_3$]-equivalent, titania [TiO$_2$]-equivalent, magnesia [MgO]-equivalent and silica [SiO$_2$]-equivalent molar ratio thereof, [Al$_2$O$_3$]/[TiO$_2$]/[MgO]/ [SiO$_2$] = 34.3%/50.2%/9.4%/6.1%.

(1) Aluminum source powder:
Aluminum oxide powder (α-form crystal, BET specific surface area: 0.53 m$^2$/g, D50: 28.5 μm)    33.70 parts by mass
(2) Titanium source powder:
Titanium oxide powder (Cronos' "Cronos 3025", rutile-form crystal, BET specific surface area: 2.95 m$^2$/g, D50: 0.5 μm)    38.92 parts by mass
(3) Magnesium source powder:
Magnesium oxide powder (Ube Materials' "UC-95M", BET specific surface area: 11.5 m$^2$/g, D50: 3.5 μm)    3.67 parts by mass
(4) Silicon source powder:
Glass frit (Takara Standard's "CK0832", BET specific surface area: 2.0 m$^2$/g, D50: 6.0 μm)    3.18 parts by mass
(5) Pore-forming agent
Corn starch (Nihon Cornstarch's "Corn StarchY-3P")    13.26 parts by mass
(6) Binder
Metolose (Shin-Etsu Chemical's "SM-4000")    5.09 parts by mass
Metolose (Shin-Etsu Chemical's "60SH-4000")    2.18 parts by mass

The obtained pre-fired bodies had an average value of crushing strength of 5.6 kgf and showed excellent mechanical strength. The determination evaluation of the shaped body after the main firing step was carried out in the same manner as in Example 1, the powder had a crystal peak of aluminum magnesium titanate and the AT conversion ratio of the powder was 100%.

Example 3

Pre-fired bodies were produced in the same manner as in Example 1 except that, the following starting material powders, pore-forming agent and binders were used. "Part(s) by mass" shown below is a value when the total amount of the starting material powders (an aluminum source powder, a titanium source powder, a magnesium source powder and a silicon source powder), the pore-forming agent, and the binders is defined to be 100 parts by mass. The prepared composition of the starting material powders mentioned below is, in terms of the alumina [Al$_2$O$_3$]-equivalent, titania [TiO$_2$]-equivalent, magnesia [MgO]-equivalent and silica [SiO$_2$]-equivalent molar ratio thereof, [Al$_2$O$_3$]/[TiO$_2$]/[MgO]/ [SiO$_2$] = 34.3%/50.2%/9.4%/6.1%.

| | |
|---|---|
| (1) Aluminum source powder: | |
| Aluminum oxide powder (α-form crystal, BET specific surface area: 0.53 m$^2$/g, D50: 28.5 μm) | 32.25 parts by mass |
| (2) Titanium source powder: | |
| Titanium oxide powder (Cronos' "Cronos 3025", rutile-form crystal, BET specific surface area: 2.95 m$^2$/g, D50: 0.5 μm) | 38.92 parts by mass |
| (3) Magnesium source powder: | |
| Hydrotalcite (Kyowa Chemical's "DHT-6", BET specific surface area: 17.5 m$^2$/g, D50: 17.46 μm) | 5.12 parts by mass |
| (4) Silicon source powder: | |
| Glass frit (Takara Standard's "CK0832", BET specific surface area: 2.0 m$^2$/g, D50: 6.0 μm) | 3.18 parts by mass |
| (5) Pore-forming agent | |
| Corn starch (Nihon Cornstarch's "Corn Starch Y-3P") | 13.26 parts by mass |
| (6) Binder | |
| Metolose (Shin-Etsu Chemical's "SM-4000") | 5.09 parts by mass |
| Metolose (Shin-Etsu Chemical's "60SH-4000") | 2.18 parts by mass |

The obtained pre-fired bodies had an average value of crushing strength of 6.4 kgf and showed excellent mechanical strength. The determination evaluation of the shaped body after the main firing step was carried out in the same manner as in Example 1, the powder had a crystal peak of aluminum magnesium titanate and the AT conversion ratio of the powder was 100%.

<Comparative Example 1>

Pre-fired bodies were produced in the same manner as in Example 1 except that, the following starting material powders, pore-forming agent and binders were used. "Part(s) by mass" shown below is a value when the total amount of the starting material powders (an aluminum source powder, a titanium source powder, a magnesium source powder and a silicon source powder), the pore-forming agent, and the binders is defined to be 100 parts by mass. The prepared composition of the starting material powders mentioned below is, in terms of the alumina [Al$_2$O$_3$]-equivalent, titania [TiO$_2$]-equivalent, magnesia [MgO]-equivalent and silica [SiO$_2$]-equivalent molar ratio thereof, [Al$_2$O$_3$]/[TiO$_2$]/[MgO]/[SiO$_2$] = 34.3%/50.2%/9.4%/6.1%.

| | |
|---|---|
| (1) Aluminum source powder: | |
| Aluminum oxide powder (α-form crystal, BET specific surface area: 0.53 m$^2$/g, D50: 28.5 μm) | 22.83 parts by mass |
| (2) Titanium source powder: | |
| Titanium oxide powder (Cronos' "Cronos 3025", rutile-form crystal, BET specific surface area: 2.95 m$^2$/g, D50: 0.5 μm) | 38.92 parts by mass |
| (3) Magnesium source powder: | |
| Magnesia spinel (Saint-Gobain's "VS4J", BET specific surface area: 1.23 m$^2$/g, D50: 5.5 μm) | 14.54 parts by mass |
| (4) Silicon source powder: | |
| Glass frit (Takara Standard's "CK0832", BET specific surface area: 2.0 m$^2$/g, D50: 6.0 μm) | 3.18 parts by mass |
| (5) Pore-forming agent | |
| Corn starch (Nihon Cornstarch's "Corn Starch Y-3P") | 13.26 parts by mass |
| (6) Binder | |
| Metolose (Shin-Etsu Chemical's "SM-4000") | 5.09 parts by mass |
| Metolose (Shin-Etsu Chemical's "60SH-4000") | 2.18 parts by mass |

The obtained pre-fired bodies had an average value of crushing strength of 1.6 kgf and showed extremely low mechanical strength. The determination evaluation of the shaped body after the main firing step was carried out in the same manner as in Example 1, the powder had a crystal peak of aluminum magnesium titanate and the AT conversion ratio of the powder was 100%.

INDUSTRIAL APPLICABILITY

According to the process of the present invention, since a shaped body can maintain high mechanical strength even after burning out of a binder, cracking and the like of the shaped body hardly occurs in the firing step. Consequently, by the process of the present invention an aluminum titanate-based fired body with a desired shape can be produced at a high yield.

**Claims**

1.  A process for producing an aluminum titanate-based fired body, comprising a step of firing a shaped body of a starting material mixture containing an aluminum source powder, a titanium source powder and a magnesium source powder, wherein the BET specific surface area of the magnesium source powder is not less than 2.0 m$^2$/g and not more than 30.0 m$^2$/g.

2.  The process according to claim 1, wherein the starting material mixture further contains a silicon source powder.

<div align="center">

**INTERNATIONAL SEARCH REPORT**

</div>

| | International application No. |
|---|---|
| | PCT/JP2010/062028 |

**A. CLASSIFICATION OF SUBJECT MATTER**
*C04B35/443*(2006.01)i, *C01G23/00*(2006.01)i

According to International Patent Classification (IPC) or to both national classification and IPC

**B. FIELDS SEARCHED**

Minimum documentation searched (classification system followed by classification symbols)
C04B35/443, C01G23/00

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2005/105704 A1 (Ohcera Co., Ltd.), 10 November 2005 (10.11.2005), claims & US 2007/0224110 A1 & EP 1741684 A1 & CA 2563600 A & KR 10-2007-0012365 A & CN 1946653 A | 1-2 |
| Y | JP 2008-100892 A (Nikkato Corp.), 01 May 2008 (01.05.2008), claims; paragraphs [0016], [0023], [0027] (Family: none) | 1-2 |
| Y | JP 2005-211354 A (Kyocera Corp.), 11 August 2005 (11.08.2005), claims; paragraphs [0008], [0025], [0056]; table 1 (Family: none) | 1-2 |

☒ Further documents are listed in the continuation of Box C.  ☐ See patent family annex.

| | |
|---|---|
| \* Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| 01 October, 2010 (01.10.10) | 12 October, 2010 (12.10.10) |

| Name and mailing address of the ISA/ <br> Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
| --- |
| PCT/JP2010/062028 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2001-139369 A (Tsutomu FUKUDA), 22 May 2001 (22.05.2001), claims & US 6403019 B1        & EP 1156023 A1 & DE 60013408 T        & CA 2325172 A & TW 548254 B         & AT 275114 T & KR 10-2001-0051471 A | 1-2 |
| A | JP 60-60971 A (Hitachi Chemical Co., Ltd.), 08 April 1985 (08.04.1985), claims; table 1 (Family: none) | 1-2 |
| A | WO 2009/087997 A1 (Sumitomo Chemical Co., Ltd.), 16 July 2009 (16.07.2009), claims & JP 2009-184903 A | 1-2 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 05105704 A